# EUROPEAN PATENT APPLICATION

(11) **EP 4 795 909 A1**
(43) Date of publication of application: **26.08.2026**
(21) Application number: 24896656.6
(22) Date of filing: 28.11.2024
(51) Int. Cl.: A01B 33/02, A01D 34/42, B62D 51/06, A01B 33/08

(54) **POWER TOOL**

(30) Priority: 30.11.2023 CN 202323267560 U
(71) Applicant: Greenworks (Jiangsu) Co., Ltd., Changzhou, Jiangsu 213023 (CN)
(72) Inventor: LI, Shuhua, hangzhou, Jiangsu 213023 (CN); WANG, Yu, hangzhou, Jiangsu 213023 (CN)
(74) Representative: Bergenstråhle & Partners AB
(86) International application number: PCT/CN2024/135319
(87) International publication number: WO 2025/113571

(57) **Abstract**

A power tool includes a frame, a battery pack assembly, a driving motor and a working assembly. The battery pack assembly is mounted on the frame to supply power to the power tool. The driving motor is mounted on the frame. The working assembly is mounted on the frame and driven by the driving motor to rotate. Wherein, the battery pack assembly and the driving motor are located above the working assembly rotating shaft and arranged along a direction parallel to a rotating shaft of the working assembly.

## Description

### CROSS REFERENCE TO RELATED APPLICATION

The present application is a continuation application of PCT application No. PCT/CN2024/135319 filed on November 28, 2024, which claims the benefit of CN202323267560.7 filed on November 30, 2023. All the above are hereby incorporated by reference for all purposes.

### TECHNICAL FIELD

The disclosure relates to a field of garden tools, in particular to a power tool.

### BACKGROUND

The conventional power tools, such as tillers, mowers, sweepers, etc., generally have the problem of unreasonable layout of the driving assembly and the battery pack assembly, which not only makes the overall structure of the power tool not compact and affects the appearance of the device, but also the weight of the battery pack assembly and the driving motor cannot effectively suppress vertical vibrations generated during operation, leading to reduced operational efficiency and operator discomfort.

### SUMMARY

The disclosure provides a power tool to address technical problems associated with poor operation effect and low operation efficiency of a conventional power tool due to an unreasonable layout of the driving assembly and the battery pack assembly.

One or more embodiments provide the power tool, and the power tool includes a frame, a battery pack assembly, a driving motor and a working assembly. The battery pack assembly is mounted on the frame to supply power to the power tool. The driving motor is mounted on the frame. The working assembly is mounted on the frame and driven by the driving motor to rotate. Wherein, the battery pack assembly and the driving motor are located substantially above the working assembly rotating shaft and arranged along a direction parallel to a rotating shaft of the working assembly.

In an embodiment of the power tool of the disclosure, the driving motor is disposed directly above a middle position of the rotating shaft of the working assembly, the battery pack assembly includes a plurality of battery pack units, and the plurality of battery pack units are respectively located on opposite sides of the driving motor.

In an embodiment of the power tool of the disclosure, the plurality of battery pack units is symmetrically disposed on the opposite sides of the driving motor.

In an embodiment of the power tool of the disclosure, a first housing is disposed on a side of the frame opposite the working assembly, and the driving motor and the battery pack assembly are disposed within the first housing.

In an embodiment of the power tool of the disclosure, a wheel assembly and a handle are further disposed on the frame, along a traveling direction of the power tool, the rotating shaft of the working assembly is disposed between a center of gravity of the first housing and a center of gravity of the wheel assembly, and the handle is disposed on a side close to a wheel.

In an embodiment of the power tool of the disclosure, a battery compartment is disposed within the first housing, and the battery pack unit is accommodated within the battery compartment.

In an embodiment of the power tool of the disclosure, the power tool further includes a transmission assembly, the driving motor is disposed within the first housing, and the driving motor is operatively coupled to the working assembly through the transmission assembly.

In an embodiment of the power tool of the disclosure, the first housing includes a first air inlet and a first air outlet, a second housing is disposed within the first housing, the driving motor is disposed within the second housing, the second housing includes a second air inlet and a second air outlet, the second air inlet is in fluid communication with the first air inlet, and the second air outlet is in fluid communication with the first air outlet.

In an embodiment of the power tool of the disclosure, a control board is further disposed within the first housing, and the control board is disposed between the plurality of battery pack units above the driving motor.

In an embodiment of the power tool of the disclosure, a control board is further disposed within the first housing, the control board includes a heat sink, and the heat sink is disposed between the first air inlet and the second air inlet.

In an embodiment of the power tool of the disclosure, a control board is further disposed within the first housing, the control board includes a heat sink, a flowing passage is formed between the heat sink and a side wall of the first housing, and two ends of the flowing passage are respectively in fluid communication with the first air inlet and the second air inlet.

In the power tool of the disclosure, the battery pack assembly and the driving motor are located above the rotating shaft of the working assembly and arranged along the direction substantially parallel to the rotating shaft of the working assembly, so that the center of gravity of the battery pack assembly and the center of gravity of the driving motor are both aligned substantially along a direction parallel to the rotating shaft, and then the downward pressing force distribution along the direction substantially parallel to the rotating shaft of the working assembly may be enhanced, thereby effectively addressing the problem of the vertical vibration generated in the operation of the working assembly, and increasing the operation effect and the operation efficiency of the working assembly. Meanwhile, vibrations experienced by the operator are reduced, and the operating comfort is increased.

### BRIEF DESCRIPTION OF THE DRAWINGS

In order to explain technical solutions of embodiments of the disclosure more clearly, the following will briefly introduce drawings used in a description of the embodiments or the prior art. Obviously, the drawings in the following description are only some embodiments of the disclosure. For those of ordinary skill in the art, other drawings may be obtained based on these drawings without undue creative effort.
FIG. 1 is a schematic perspective view of a power tool according to at least one embodiment of the disclosure.
FIG. 2 is another perspective schematic view of the power tool from another angle according to at least one embodiment of the disclosure.
FIG. 3 is a side view of a power tool according to at least one embodiment of the disclosure.
FIG. 4 is a front view of a power tool according to at least one embodiment of the disclosure.
FIG. 5 is a top view of a power tool according to at least one embodiment of the disclosure.
FIG. 6 is a partial cross-sectional view of the power tool according to at least one embodiment of the disclosure.
FIG. 7 is a partial cross-sectional view of the power tool according to another embodiment of the disclosure.
FIG. 8 is a schematic structural view of a box of the power tool according to at least one embodiment of the disclosure.
FIG. 9 is a partial schematic structural view of the power tool with a first cover removed and a second cover according to at least one embodiment of the disclosure.
FIG. 10 is a schematic structural view of a battery compartment installed in a first housing according to at least one embodiment of the disclosure.
FIG. 11 is a partial schematic structural view of a second housing in a first housing according to at least one embodiment of the disclosure.
FIG. 12 is a schematic structural view illustrating a control board installed above a driving motor according to at least one embodiment of the disclosure.
FIG. 13 is a schematic structural view illustrating the control board installed toward a side wall of a first housing according to at least one embodiment of the disclosure.

### PART NUMBER DESCRIPTION

100-power tool; 110-frame; 120-protective cover; 130-battery pack assembly; 131-battery pack unit; 140-driving assembly; 141-driving motor; 142-reduction gearbox; 150-working assembly; 151-rotating shaft; 1511-rotating shaft unit; 152-working unit; 160-handle; 170-wheel assembly; 171-wheel; 172-supporting shaft; 180-first reference line; 181-second reference line; 190-first housing; 191-accommodating chamber ; 192-battery compartment ; 1921-wiring terminal; 193-first cover ; 194-second cover ; 195-first air inlet; 196-supporting component; 197-first air outlet; 198-second housing; 1981-second air inlet; 1982-second air outlet; 199-control board; 1991-heat sink; 1992-flowing passage.

### DETAILED DESCRIPTION

Embodiments of the present disclosure are described below with reference to the accompanying drawings. Those skilled in the art will readily appreciate additional advantages and modifications from the following description. The present disclosure may be implemented in various other embodiments, and various modifications and changes may be made without departing from the scope of the present disclosure. Unless otherwise specified, technical and scientific terms used herein have meanings commonly understood by a person having ordinary skill in the art.

Where a range of values is provided, it is understood that each intervening value between the upper and lower limits of that range, as well as the two endpoints, are specifically disclosed unless the context clearly dictates otherwise. Unless defined otherwise, all technical and scientific terms used herein have the same meaning as commonly understood by one of ordinary skill in the art to which this disclosure belongs. Furthermore, the disclosure may be practiced using any methods, devices, and materials similar or equivalent to those described in the embodiments herein.

It should be noted that terms such as "upper," "lower," "left," "right," "middle," and "one" as used herein are for convenience of description only and do not limit the scope of the disclosure. Any modifications or adjustments to the relative positional relationships of components shall be deemed within the scope of the disclosure, provided that no substantial change is made to the technical content.

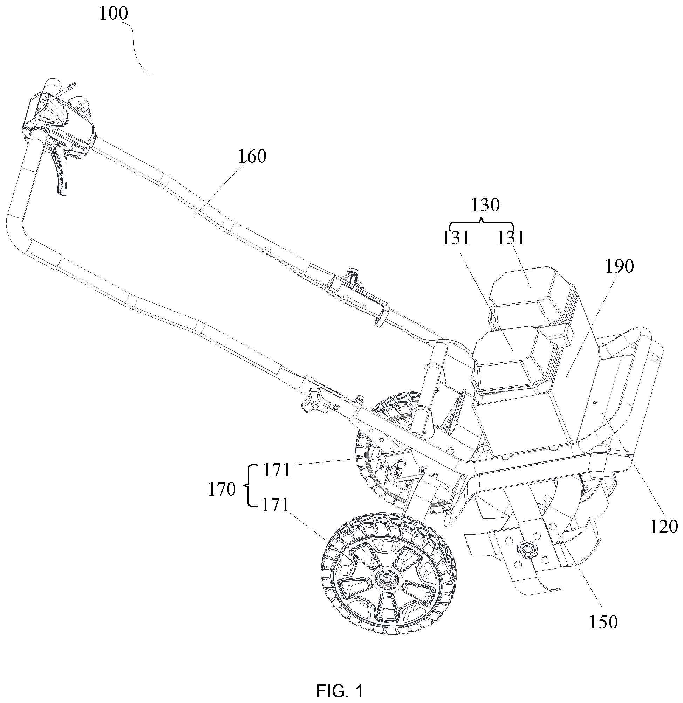

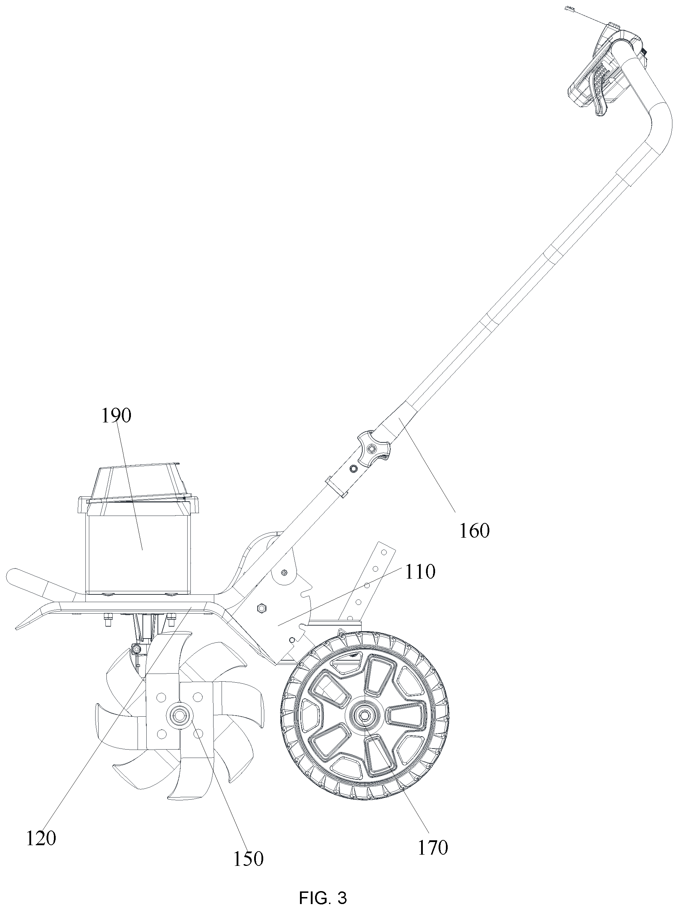

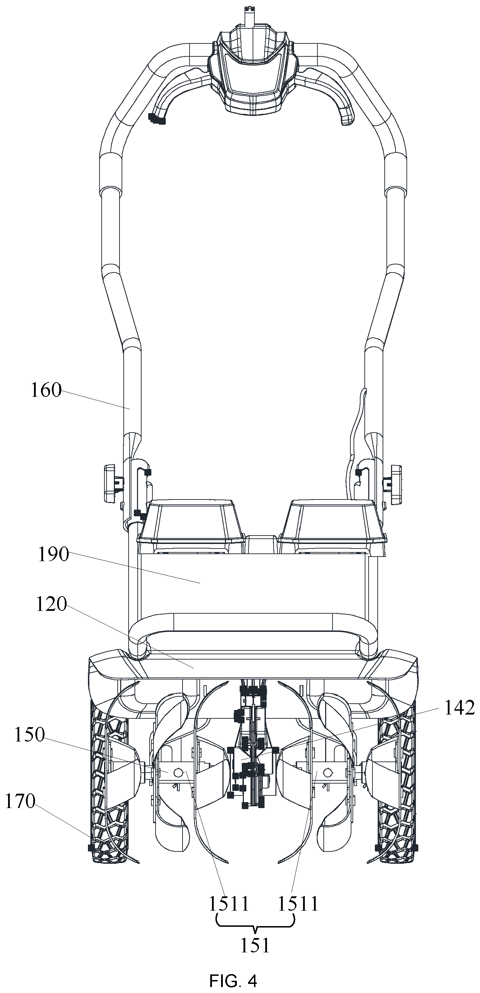

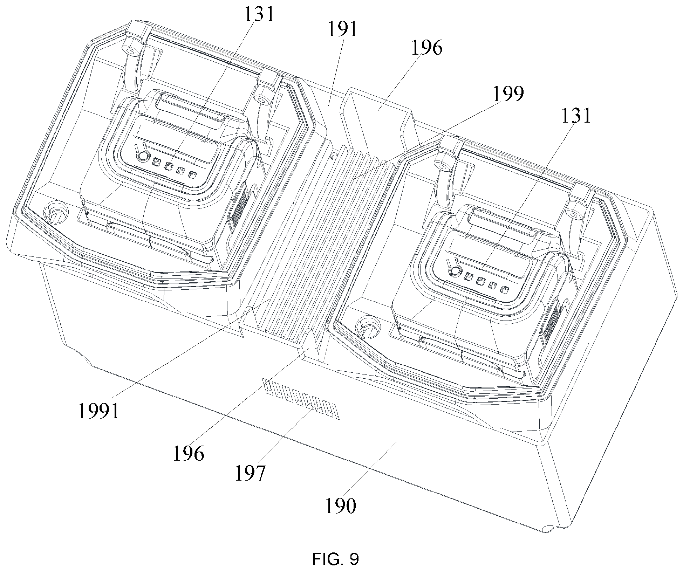

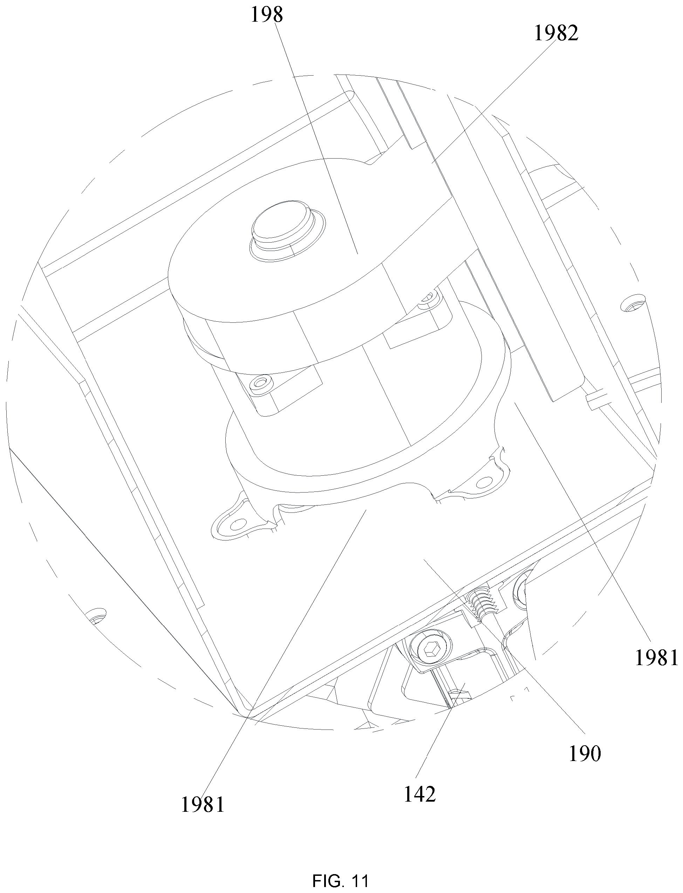

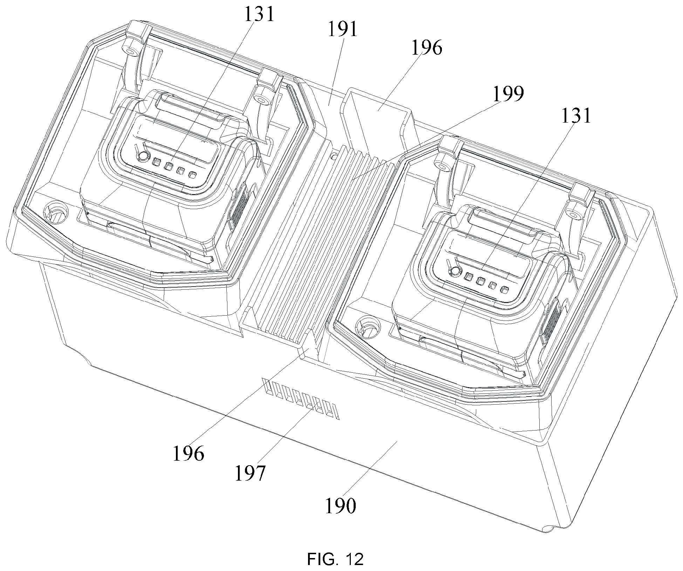

Please refer to FIG. 1 through FIG. 13. In a power tool 100 of the disclosure, a battery pack assembly 130 and a driving motor 141 are disposed above a rotating shaft 151 of a working assembly 150 and arranged along a direction substantially parallel to the rotating shaft 151 of the working assembly 150. With this configuration, a center of gravity of the battery pack assembly 130 and a center of gravity of the driving motor 141 are both positioned proximate to the direction parallel to the rotating shaft 151 of the working assembly 150. Consequently, the downward pressing force distribution along the direction parallel to the rotating shaft 151 of the working assembly 150 is enhanced, thereby effectively addressing a problem of the vertical vibration generated in the operation of the working assembly, and increasing the operation effect and the operation efficiency of the working assembly 150. Simultaneously, vibrations transmitted to an operator can be attenuated, thereby improving the operational comfort for the operator.

Please refer to FIG. 1 through FIG. 6. The power tool 100 includes a frame 110, a battery pack assembly 130, a driving assembly 140 and a working assembly 150. The structure of the frame 110 is not limited and may refer to the structure of the frame 110 of a conventional power tool 100. To facilitate the maneuverability of the power tool 100, a handle 160 and a wheel assembly 170 are mounted on the frame 110. The wheel assembly 170 includes two wheels 171 and a supporting shaft 172. In one embodiment, the supporting shaft 172 is rotatably coupled to the frame 110. The two wheels 171 are respectively fixed to two ends of the supporting shaft 172. A driving component is mounted on the frame 110, such as a driving motor or a geared motor. The driving component drives the supporting shaft 172 to rotate through a transmission assembly, and the supporting shaft 172 drives the wheels 171 to rotate, thereby driving the frame 110 to move. In another embodiment, the supporting shaft 172 is fixed to the frame 110. The two wheels 171 are respectively fixed to the two ends of the supporting shaft 172. The driving component is mounted on the frame 110, such as the driving motor or the geared motor. The driving component drives the wheels 171 to rotate through the transmission assembly, thereby driving the frame 110 to move. The handle 160 is installed at a front end or a rear end of the frame 110and fixed to the frame 110 or rotatably coupled to the frame 110, allowing an operator to push the power tool 100. The frame 110 further includes a protective cover 120, and the protective cover 120 is fixed to the frame 110 via fasteners such as bolts. The protective cover 120 includes a frame structure or a sheet metal structure provided that the strength and the installation requirements are satisfied. In one embodiment, the protective cover 120 is the sheet metal structure. An input side of the driving assembly 140 is fixed above the protective cover 120 through the bolts, and an output side of the driving assembly 140 is installed below the protective cover 120. The input side of the driving assembly 140 is a motor, a motor-reducer or a hydraulic motor, etc., and the output side of the driving assembly 140 is a gear assembly, a sprocket assembly or a worm gear and worm assembly, etc. In one embodiment, the driving assembly 140 includes the driving motor 141 and a reduction gearbox 142. The driving motor 141 is fixed above the protective cover 120 through the bolts, the reduction gearbox 142 is fixed below the protective cover 120 through the bolts. An output shaft of the driving motor 141 penetrates through the protective cover 120 and is coupled to an input end of the reduction gearbox 142.In one embodiment, the driving assembly 140 is installed below the protective cover 120 provided that the driving assembly 140 is positioned above the rotating shaft 151. In another embodiment, the frame 110 does not include the protective cover 120. The battery pack assembly 130, the driving assembly 140 and the working assembly 150 is directly mounted on the frame 110.

The working assembly 150 includes the rotating shaft 151 and a plurality of working units 152.The plurality of working units 152 are mounted to the rotating shaft 151 and are sequentially arranged along a longitudinal direction of the rotating shaft 151. The rotating shaft 151 is coupled to an output end of the reduction gearbox 142. The driving motor 141 is configured to drive the reduction gearbox 142, which in turn rotates the rotating shaft 151, thereby driving the working units 152 to rotate for operation.

It should be noted that the power tool 100 in the disclosure may be exemplified as a tiller, a rake, a floor sweeping machine, or similar equipment. Accordingly, the corresponding working assemblies 150 may be configured as a tiller auger, a rake auger, a sweeping brush, respectively. Similarly, the corresponding working units 152 may include a tiller blade, a rake blade, a sweeping brush unit, respectively. A specific selection of the working assembly 150 is determined based on actual operation requirements of the power tool 100.

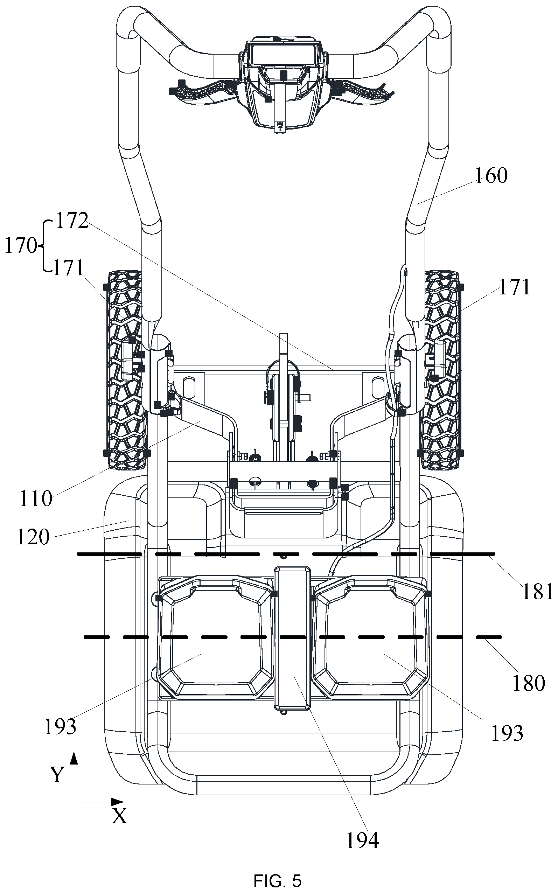

The battery pack assembly 130 is secured to the protective cover 120 by fasteners, such as but not limited to bolts. The battery pack assembly 130 is electrically coupled to the driving motor 141 to provide electric energy for the operation of the driving motor 141. The battery pack assembly 130 may be installed above or below the protective cover 120, provided that the battery pack assembly 130 is positioned above the rotating shaft 151. In this embodiment, the battery pack assembly 130 is installed above the protective cover 120, which not only facilitates the electrical connection between the battery pack assembly 130 and the driving motor 141 but also reduces the overall height of the assembly, thereby improving a structural compactness of the power tool 100. The battery pack assembly 130 and the driving motor 141 are arranged on the protective cover 120 along a direction substantially parallel to the rotational axis of the rotating shaft 151 of the working assembly 150. In one embodiment, the direction parallel to the rotating shaft 151 of the working assembly 150 is consistent with a length direction of the protective cover 120 (as shown by an X-axis in FIG. 5). The battery pack assembly 130 and the driving motor 141 are sequentially arranged along the length direction of the protective cover 120. Specifically, along the length direction of the protective cover 120, the battery pack assembly 130 and the driving motor 141 may be located at one lateral end of the protective cover 120, at two opposite lateral ends of the protective cover 120, or at middle position of the protective cover 120 directly above the rotating shaft 151. With this configuration, the center of gravity of the battery pack assembly 130 and the center of gravity of the driving assembly 140 are both positioned proximate to a plane passing vertically through the rotational axis of the rotating shaft 151, and are distributed along the extending direction of the rotating shaft 151. This arrangement enhances the downward pressing force distribution along the direction parallel to the rotating shaft 151, effectively suppressing vertical vibration of the working assembly 150 during operation, thereby improving operational effect and efficiency. Simultaneously, vibrations transmitted to the operator are attenuated, enhancing operational comfort.

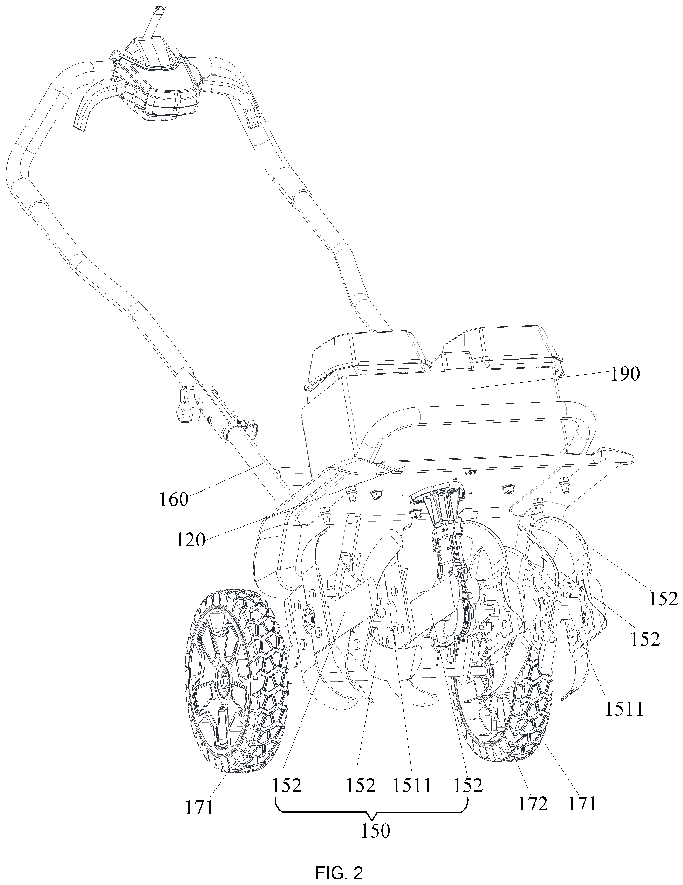

Please refer to FIG. 2, FIG. 6 and FIG. 7. In an embodiment of the power tool 100, the driving assembly 140 is disposed at the middle position above the longitudinal span of the rotating shaft 151 of the working assembly 150. The rotating shaft 151 includes two shift units, which are symmetrically disposed at two opposite ends of the reduction gearbox 142 and are respectively coupled to two output ends of the reduction gearbox 142 thereof. This configuration minimizes rotational synchronization variances between the shaft units on both sides, ensuring uniformity in the operational effect of the working assembly 150.
The battery pack assembly 130 includes a plurality of battery pack units 131 positioned on opposite sides of the driving assembly140. While two or more battery pack units 131 may be provided, this embodiment includes two battery pack units 131. Each battery pack unit 131 may include one or more battery packs, and two battery pack units 131 may be coupled in series, parallel, or combination thereof. Along a length direction of the protective cover 120, the two battery pack units 131 are symmetrically disposed on the two sides of the driving motor 141. Along a width direction of the protective cover 120 (as shown by a Y-axis in FIG. 5), the two battery pack units 131 may be located on the same side of the rotating shaft 151 or on opposite sides thereof. Notably, along the width direction of the protective cover 120, the two battery pack units 131 are both disposed proximate to the rotational a of the rotating shaft 151. Consequently, the battery pack units 131 on the two sides generate consistent downward pressures on their respective shift units, thereby ensuring a uniform pressure effect and consistent operational performance across both sides of the working assembly 150.

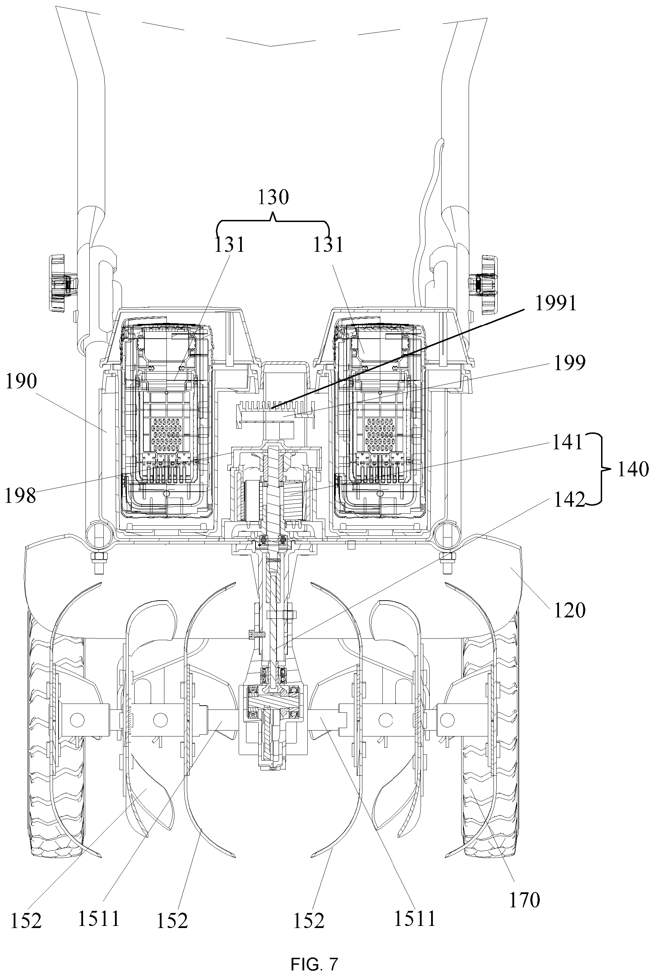

While centers of gravity of the two battery packs are respectively disposed on opposite sides of the driving motor 141, the consistency of the pressure effect of the shift units of the rotating shafts 151 can be improved. In a preferred embodiment shown in FIG. 7, in an embodiment of the power tool 100 of the disclosure, the two battery pack units 131 are symmetrically disposed on opposite sides of the driving motor 141 along the length direction of the protective cover 120. This ensures that the shift units of the rotating shafts 151 on the two sides are subjected to a substantially identical pressure effect, so that the consistency of the pressure effect of the shift units of the rotating shafts 151 on the two sides is further improved. Referring to FIG. 5 through FIG. 7, orthogonal projections of the center of gravity of the driving motor 141 and the centers of gravity of the battery pack units 131 onto a horizontal plane are aligned along a first reference line 180 (indicated by dashed lines in FIG. 5). Similarly, the projection of the rotating shaft 151 onto the horizontal plane defines a second reference line 181 (indicated by dotted lines in FIG. 5), and the first reference line 180 is parallel to the second reference line 181. Along a traveling direction of the power tool 100 (Y-axis in FIG. 5), the first reference line 180 may be located forward of, rearward of, or coincident with the rotational of the rotating shaft 151. By virtue of this arrangement, the driving motor 141 and the battery pack unit 131 generate a more uniform and stable downward pressing force along the direction parallel to the rotating shaft 151, thereby further ensuring the uniformity of operational performance of the working assembly 150.

Please refer to FIG. 2, FIG. 6, FIG. 7, FIG. 8 and FIG. 9. In an embodiment of the power tool 100 of the disclosure, a first housing 190 is disposed above the protective cover 120, and the first housing 190 is secured to the protective cover 120 by fasteners, such as but not limited to bolts. The first housing 190 may include any suitable structure, such as a frame or a box-like structure. In this embodiment, the first housing 190 is the box-like structure. The first housing 190 includes an accommodating chamber 191, wherein the driving motor 141 and the two battery pack units 131 are both disposed within the accommodating chamber 191, and mounted therein via means such as, but is not limited to, bolt connections. Through the first housing 190, on one hand, the first housing 190 provides the environmental and mechanical protection for the driving motor 141 and the battery pack unit 131, thereby reducing the risk of damage. On the other hand, the driving motor 141 and the battery pack unit 131 are integrated into a unified assembly. This integration enhances the structural compactness of the power tool 100 and results in a more aesthetically streamlined appearance.

Furthermore, to lower the center of gravity of the first housing 190, in an embodiment of power tool 100 shown in FIG. 7, a bottom end of each battery pack unit 131 is positioned lower than a top end of the driving motor 141 along a height direction of the first housing 190. By virtue of this arrangement, the height of the center of gravity of the battery pack unit 131 is reduced, thereby lowering overall center of gravity of the first housing 190, and enhancing the operational stability of the power tool 100.

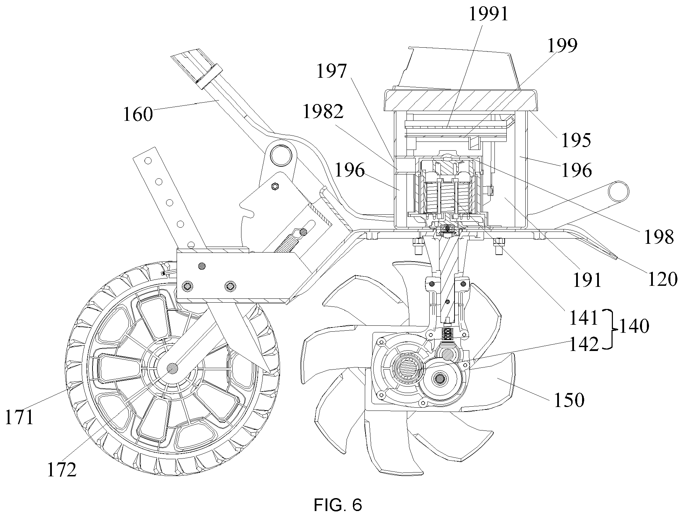

Please refer to FIG. 5 and FIG. 6. In an embodiment of the power tool 100 of the disclosure, along the traveling direction of the power tool 100, the center of gravity of the first housing 190 and the longitudinal axis of the supporting shaft 172 of the wheel assembly 170 are respectively located on opposite sides of the rotational axis of the rotating shaft 151. The axis of the supporting shaft 172 is parallel to the rotational axis of the rotating shaft 151, and the handle 160 is disposed on a side proximate to the wheel assembly 170. This configuration optimizes the fore-aft balance of power tool 100. When the working assembly 150 is not in operation, the operator can lift the working assembly 150 with the minimal effort by pressing down on the handle 160, thereby facilitating a long-distance transportation of the power tool 100. Moreover, along a direction parallel to the rotating shaft 151, the center of gravity of the first housing 190 is preferably located at in a substantially central position relative to the longitudinal span of the rotating shaft 151.Although the center of gravity may be offset toward either end of the rotating shaft 151 in other embodiments, positioning the center of gravity at the substantial center in the present embodiment further balances the load distribution between the wheels 171 on both sides. This configuration further enhances the lateral stability of the power tool 100 during pushing and operation.

Please refer to FIG. 6. In an embodiment of the power tool 100, at least one battery compartment 192 is disposed within the first housing 190 to and accommodated the battery pack units 131. The number of the battery compartments 192 correspond to the number of battery pack units 131. In the present embodiment, as shown in FIG. 6, two battery compartment 192 are provided in the first housing 190 to respectively receive the two battery pack units 131. The battery compartment 192 may be a discrete structure fixed to within the first housing 190 or may be integrally formed with the first housing 190 as a unitary piece, provided that the battery pack unit 131 can be securely seated therein. To facilitate an electrical communication, each battery compartment 192 includes a wiring terminal 1921. Upon insertion of the battery pack units 131 into the respective battery compartments 192, the battery pack units 131 electrically engage with the wiring terminals 1921, thereby establishing an electrical connection with the driving motor 141. The battery compartment 192 ensures the stable mounting of the battery pack units 131 while simplifying the electrical integration with the driving motor 141.

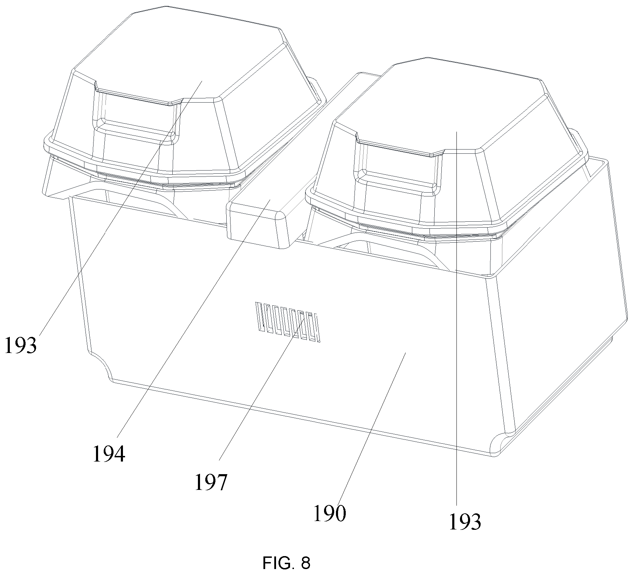

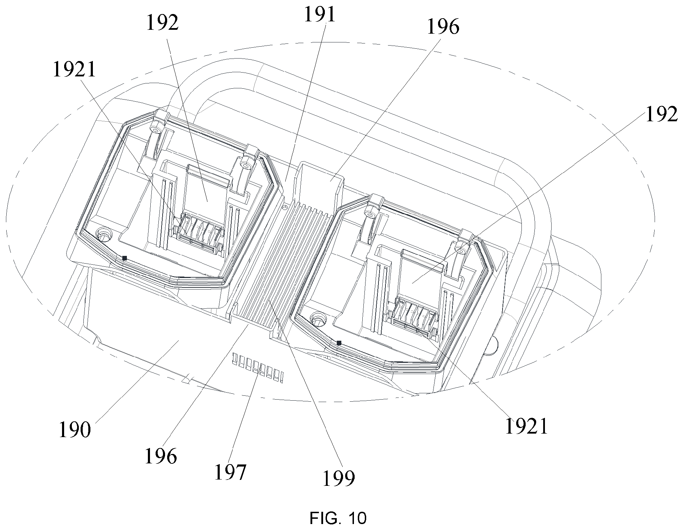

Furthermore, to facilitate an insertion and removal of the battery pack unit 131 within the battery compartment 192, in an embodiment of the disclosure shown in FIG. 8 and FIG. 10, the battery compartment 192 opens upward along the height direction of the first housing 190. The opening of the battery compartment 192 is enclosed by a first cover 193. This first cover 193 is configured to seal the battery compartment 192, thereby preventing external dust, moisture, or debris from entering and preserving the integrity of the electrical connection for the battery pack units 131.

Please refer to FIG. 6, FIG. 8 and FIG. 9. In an embodiment of the power tool 100 of the disclosure, a second cover 194 is disposed at an opening of the first housing 190, t covering a middle region between the two battery compartments 192. A first air inlet 195 is defined between the second cover 194 and a side wall of the first housing 190. Specifically, supporting components 196 are oppositely disposed on the side wall of the first housing 190 within the middle region of the two battery compartments 192. The supporting components 196 include substantially U-shaped grooves. A length direction of the supporting component 196 is consistent with the height direction of the first housing 190. An outer wall of the supporting component 196 is attached to an inner surface of the side wall of the first housing 190. A first longitudinal end of each supporting component 196 in the length direction extends toward a bottom of the first housing 190, while a second longitudinal end thereof t projects beyond an upper end surface of the first housing 190. The second cover 194 includes a rectangular recessed structure. The length of second cover 194 is greater than the width of the first housing 190, and the depth of the second cover 194 exceeds the height of the portion of the supporting component 196 that projects beyond the first housing 190 The second cover 194 covers the upper ends of the supporting components 196, with its longitudinal side walls abutting the upper end surface of the first housing 190. This arrangement defines a first clearance between a bottom surface of the second cover 194 and the end surface of the supporting component 196. The two ends of the short side walls of the second cover 194 extend outward beyond the side wall of the first housing 190, thereby defining a second clearance. The second clearance is in fluid communication with the first clearance to collectively form the first air inlet 195. Additionally, the first housing 190 includes a first air outlet 197 is provided on a portion of the side wall of the first housing 190 opposite to the driving motor 141. To prevent ingress of large particulate matter, the first air outlet 197 is configured as a louvered or grid-like structure.

Please refer to FIG. 6, FIG. 7 and FIG. 11. A second housing 198 is further disposed within the first housing 190, and the second housing 198 is secured to the bottom wall of the first housing 190 by fasteners, such as the bolts. The driving motor 141 is housed within the second housing 198. The second housing 198 includes a plurality of second air inlets 1981 positioned proximate to the bottom wall of the first housing 190, and the second air inlets 1981 are in fluid communication with an inner cavity of the first housing 190, thereby establishing q flow path between the second air inlets 1981 and the first air inlets 195. A second air outlet 1982 is disposed at a top end of the second housing 198 proximate to a heat cooling fan of the driving motor 141. The second air outlet 1982 extends toward and communicates with the first air outlet 197. During operation of the driving motor 141, the cooling fan creates an airflow draw, causing ambient air to enter the first housing 190 through the first air inlet 195, pass into the second housing 198 via the second air inlet 1981, flow through the driving motor 141 to absorb heat, and finally discharged through the second air outlet 1982 and the first air outlet 197 to the external environment. This configuration accelerates the airflow rate around the driving motor 141, significantly enhancing its thermal dissipation efficiency.

It should be understood that, without departing from the scope of the present disclosure, the second cover 194 and the second housing 198 may be omitted. In such an embodiment, the first housing 190 may forego these components, allowing ambient air to be introduced directly through the opening of the first housing 190 to facilitate natural convection cooling of the driving motor 141.

Please refer to FIG. 6, FIG. 7 and FIG. 12. In an embodiment of the power tool 100 of the disclosure, a control board 199 is further disposed within the first housing 190.The control board 199 is interposed between the plurality of battery pack units 131 and positioned above the driving motor 141. The control board 199 may be secured either the first housing 190 or the second housing 198, provided that it remains fixed relative to the first housing 190. The control board 199 is electrically coupled to the driving motor 141 to control the operation of the driving motor 141, and the control board 199 is further electrically coupled to the battery pack units 131 to receive power therefrom. By disposing the control board 199 between the two battery pack units 131 and above the driving motor 141, the wiring paths for the electrical connections between the control board 199, the battery pack units 131, and the driving motor 141 are minimized and simplified, thereby enhancing the efficiency of the internal electrical architecture.

Please refer to FIG. 6 and FIG. 7. To enhance the thermal dissipation of the control board 199, in an embodiment of the power tool 100 of the disclosure a heat sink 1991 is disposed on a surface of the control board 199 facing away from the driving motor 141. Along the height direction of the first housing 190, the first air inlet 195 is positioned above the heat sink 1991, while the second air inlet 1981 is positioned below the heat sink 1991. With this configuration, a defined cooling path is established: ambient air entering through the first air inlet 195 first flows across the heat sink 1991 to cool the control board 199, then enters the second housing 198 through the second air inlet 1981 to cool the driving motor 141, and is finally discharged from the first housing 190 via the second air outlet 1982 and the first air outlet 197 in sequence. This arrangement significantly improves the heat dissipation efficiency of the control board 199 by prioritizing its exposure to fresh intake air.

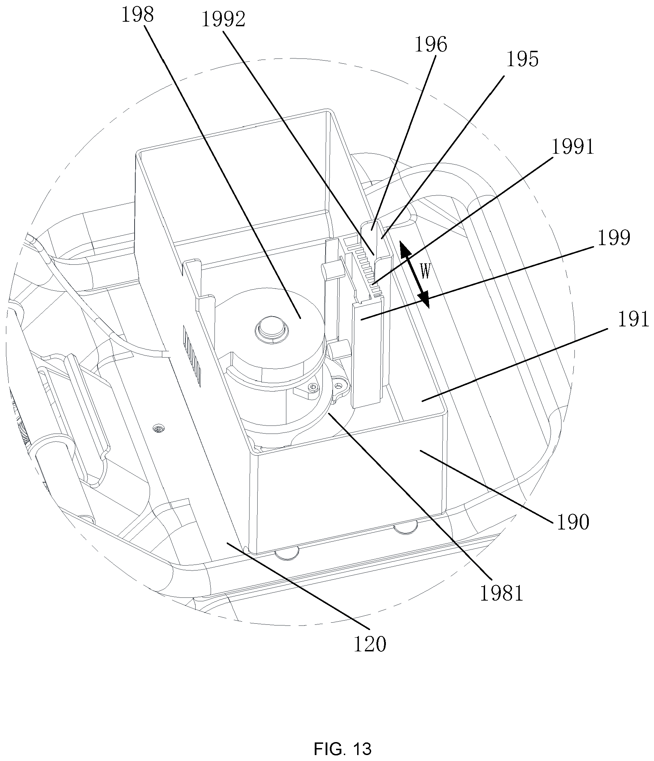

Please refer to FIG. 13. In an embodiment of the power tool 100 of the disclosure, the control board 199 is disposed between the two battery pack units 131, and interposed between the driving motor 141 and the side wall of the first housing 190. In certain embodiments, the heat sink 1991 of the control board 199 is oriented toward the side wall of the first housing 190, with at least part of the heat sink 1991 is disposed opposite to the supporting components 196 mounted on the side wall of the first housing 190. To avoid interference with the first air outlet 197 on the first housing 190, in this embodiment, the control board 199 is specifically positioned between the driving motor 141 and a side wall devoid of the first air outlet 197, and the heat sink 1991 of the control board 199 faces the side wall of the first housing 190 that does not have the first air outlet 197. Along the height direction of the first housing 190, a bottom of the control board 199 is positioned above the second air inlet 1981. By virtue of this arrangement, a flowing passage 1992 is defined between the heat sink 1991 and a U-shaped groove of the supporting component 196. An upper end of the flowing passage 1992 is in fluid communication with the first air inlet 195, while a lower end of the flowing passage 1992 is in fluid communication with the second air inlet 1981. As air enters through the first air inlet 195 and traverses the flowing passage 1992, it flows across the heat sink 1991 to facilitate concurrent thermal dissipation, thereby significantly enhancing the cooling performance of the control board 199.

It should be noted that, in the embodiment shown in FIG. 13, the control board 199 disposed between the two battery pack units 131 may be encompass a configuration where the entire width of the control board 199 is situated within a space defined between the two battery pack units 131. Alternatively, the control board 199 may at least partially overlap with the region between the two battery pack units 131 along the width direction (as indicated by the W-axis in FIG. 13). The specific positioning and orientation are determined by the actual dimensions and specifications of the control board 199 and are not limited to any particular configuration disclosed herein.

In the power tool 100 of the disclosure, both of the battery pack assembly and the driving motor are positioned above the rotating shaft of the working assembly and arranged along the direction parallel to the rotating shaft of the working assembly. Accordingly, the centers of gravity of the battery pack assembly and the driving motor are distributed proximate to the rotational axis of the working assembly. This arrangement enhances the downward pressing force distribution along the span of the rotating shaft, thereby effectively suppressing the vertical vibrations generated during the operation of the working assembly, and increasing the operation effect and the operation efficiency of the working assembly. Meanwhile, vibrations experienced by the operator are reduced, and the operating comfort is increased. In addition, through housing both the battery pack assembly 130 and the driving motor 141within the first housing 190, and through positioning the center of gravity of the first housing 190 proximate to a center of the rotating shaft 151, the overall structural configuration of the power tool 100 is rendered more compact. This results in more balanced center of gravity and superior stability during pushing and operation. The aforementioned embodiments are provided solely to illustrate the principles and technical effects of the present disclosure and are not intended to limit the scope thereof. It will be apparent to those skilled in the art that various modifications and variations can be made to the disclosed embodiments without departing from the spirit and scope of the disclosure. Accordingly, all equivalent modifications or changes achieved by those with ordinary skill in the art, based on the technical concepts disclosed herein, shall remain within the scope of the appended claims.

## Claims

1. A power tool, comprising:
a frame;
a battery pack assembly, mounted on the frame configured to supply electrical power to the power tool;
a driving motor, mounted on the frame; and
a working assembly, mounted on the frame and configured to be driven by the driving motor to rotate;
wherein, the battery pack assembly and the driving motor are located above a rotating shaft of the working assembly and arranged along a direction substantially parallel to the rotating shaft of the working assembly.

2. The power tool according to claim 1, wherein the driving motor is located above a central portion of the rotating shaft of the working assembly, the battery pack assembly comprises a plurality of battery pack units, and the plurality of battery pack units are respectively located on opposite sides of the driving motor.

3. The power tool according to claim 2, wherein the plurality of battery pack units is symmetrically arranged on the opposite sides of the driving motor.

4. The power tool according to claim 2, wherein a first housing is disposed on a side of the frame opposite the working assembly, and the driving motor and the battery pack assembly are accommodated within the first housing.

5. The power tool according to claim 4, further comprising a wheel assembly and a handle disposed on the frame, wherein, along a traveling direction of the power tool, the rotating shaft of the working assembly is positioned between a center of gravity of the first housing and a center of gravity of the wheel assembly, and the handle is positioned adjacent to the wheel assembly.

6. The power tool according to claim 4, wherein the first housing defines a battery compartment configured to receive the battery pack unit therein.

7. The power tool according to claim 4, further comprising a transmission assembly, wherein the driving motor is disposed within the first housing and is operatively coupled to the working assembly through the transmission assembly.

8. The power tool according to claim 7, wherein the first housing comprises a first air inlet and a first air outlet, a second housing is disposed within the first housing, the driving motor is disposed within the second housing, the second housing comprises a second air inlet and a second air outlet, the second air inlet being in fluid communication with the first air inlet, and the second air outlet being in fluid communication with the first air outlet.

9. The power tool according to claim 7, wherein a control board is further disposed within the first housing, and the control board is positioned between the plurality of battery pack units and above the driving motor.

10. The power tool according to claim 8, wherein a control board is disposed within the first housing, the control board comprising a heat sink positioned along an airflow path extending between the first air inlet and the second air inlet.

11. The power tool according to claim 8, wherein a control board is disposed within the first housing, the control board including a heat sink, and an airflow passage is defined between the heat sink and a side wall of the first housing, opposite ends of the airflow passage being respectively in fluid communication with the first air inlet and the second air inlet.
